# EUROPEAN PATENT APPLICATION

(11) **EP 0 791 500 A2**
(43) Date of publication of application: **27.08.1997**
(21) Application number: 97830051.5
(22) Date of filing: 12.02.1997
(51) Int. Cl.: B60N 2/28

(54) **Infant seat for vehicles**

(30) Priority: 15.02.1996 IT RM960108; 09.05.1996 IT RM960322
(71) Applicant: Capponi, Giuseppe, 00136 Rome (IT)
(72) Inventor: Capponi, Giuseppe, 00136 Rome (IT)
(74) Representative: Bazzichelli, Alfredo

(57) **Abstract**

An infant safety seat for vehicles, in particular for automobiles, is provided, comprising: a main seat body, a support frame for supporting said seat body on the seat of the vehicle, a device for fixing and adjusting the position of said seat body on said frame and a plurality of seat belts for holding an infant onto the infant safety seat;
characterised in that said support frame comprises locking means for locking the infant seat onto a respective vehicle seat, said locking means being integral with said frame and, optionally, support means for supporting said frame on the floor of the vehicle.

## Description

The present invention relates to an infant safety seat for vehicles, and more specifically to an infant safety seat for automobiles, having a locking system for locking the same to a respective car seat on which rests, and integral with the safety seat itself.

Up to date a number of different types of infant safety seats for automobiles are known. There is a first known type having a frame apted to engage in only two points with the safety seat belt of the car seat on which the frame rests.

Furthermore, there is another type of infant seat with a frame suitable for engaging in three points with the safety seat belt of the car seat on which it rests.

However, in both cases there is a problem with these infant seats, in that the engagement with the safety seat belt is of a sliding kind and therefore, in case of impact, the safety seat belt tends to slide on the infant seat due to extension of the former, so that the infant seat can move forwards in a dangerous manner. This can result in loss of safety for the infant in the infant seat.

There is also another more serious problem, resulting from the fact that the infant seat only rests on the car seat and is engaged with the safety belt only in two or three points. During impact, because of the above mentioned elongation effect of the seat belt and the points in which it engages with the infant seat, the latter is subject to an overturn torque which generates dangerous deceleration and movements of the infant seated therein, endangering the physical safety of said infant.

An object of the present invention is therefore to provide an infant safety seat that solves the above mentioned problems and at the same time provides greater safety during transport of the infant and in case of vehicle impact.

A further object of the present invention is to provide an infant safety seat for vehicles that is practical to use and suitable for being installed and removed from a vehicle seat with extreme ease.

The present invention provides an infant safety seat for vehicles, in particular for automobiles, comprising: a seat main body, a support frame for supporting said seat body on a seat of a vehicle, a device for fixing and adjusting the position of said seat body on said frame and a plurality of seat belts for holding an infant onto said infant seat;
characterised in that said support frame is provided with locking means for locking the infant seat to a respective seat of the vehicle, said locking means being integral with said frame, and, optionally, support means for supporting said frame on the floor of the vehicle.

The present invention will be further illustrated in the following by a description of various preferred embodiments thereof, given as non-limiting examples and with reference to the enclosed figures, wherein:
figures 1a, 1b and 1c are schematic side elevational views of a first embodiment of the infant safety seat according to the present invention;
figures 2a and 2b are schematic front elevational views of a generic car seat suitable for engaging with the infant safety seat according to the present invention;
figures 3a and 3b are schematic side elevational views with enlarged details of two embodiments of the infant seat according to the present invention;
figure 4 is a schematic side view of another embodiment of the infant seat according to the present invention;
figure 5 is a schematic top plan view of the infant seat shown in figure 4;
figure 6 is a schematic side elevational view showing another embodiment of the infant seat according to the present invention; and
figure 7 is a perspective view of the infant seat illustrated in figure 6.

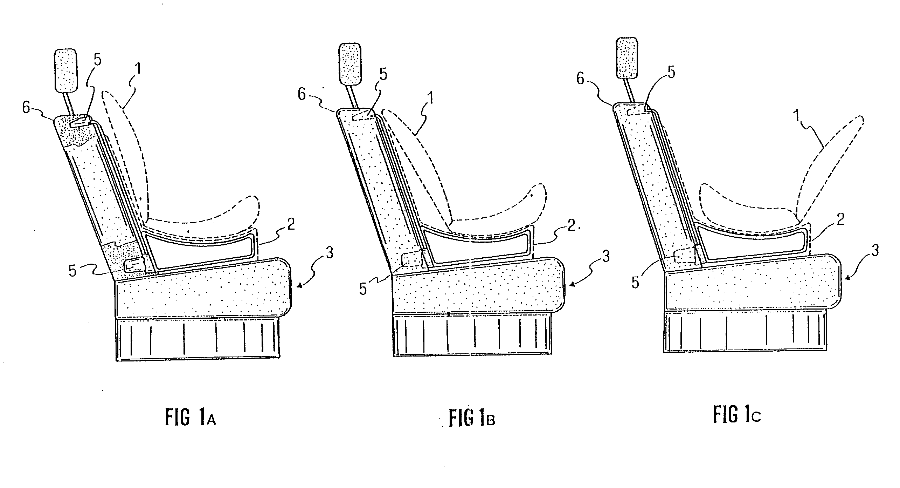

With reference now to figures 1a, 1b and 1c, a first embodiment of the infant safety seat is shown in various funtional conditions.

The infant seat comprises a main body 1 arranged in a sliding manner on a frame 2 and suitable for being locked by adjusting means (not shown in the figure) in a manner known in the state of the art. As can be seen from the figures, the arrangement is such that the body 1 of the infant seat is apted to take on different positions with respect to the frame 2. Furthermore, the infant seat formed in this way is suitable to rest on a generic car seat 3 in a *per se* known manner.

The frame 2 has three engagement members 4 (only two of which are illustrated in the figure and described in greater detail in the following), apted to engage with respective engagement members 5 integrally positioned on the back 6 of the car seat 3.

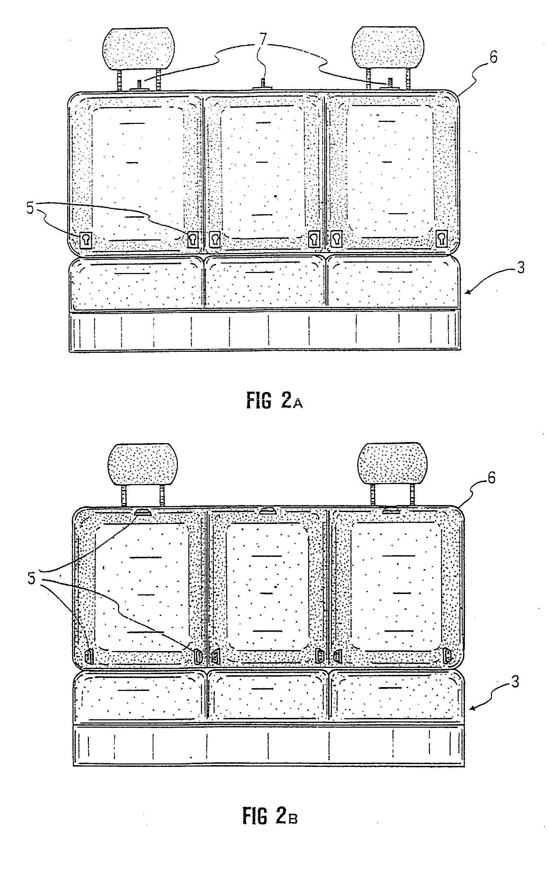

With reference to figures 2a and 2b an elevation view of a car seat 3 suitable for engaging with the infant seat according to the present invention is shown.

As is evident, the seat back 6 has three female-type engagement members 5 integrally fixed thereto in a known manner. The arrangement is such that two members 5 are positioned at the bottom of the seat back 6 and one member 5 is arranged at the top of the latter in a central position.

In the embodiment of figure 2a the engagement members 5 are female slot-type members formed on a metal surface that is integrally mounted in the seat back (to be illustrated in greater detail in the following). Furthermore, in this embodiment it is foreseen that the frame 2 be engaged at the top with the seat back 6 by means of a screw pin 7 that is integral with the latter (to be illustrated in greater detail in the following).

In the embodiment of figure 2b the engagement members 5 are the known female snap-on type members which are normally used to lock car safety seat belts (to be illustrated in greater detail in the following).

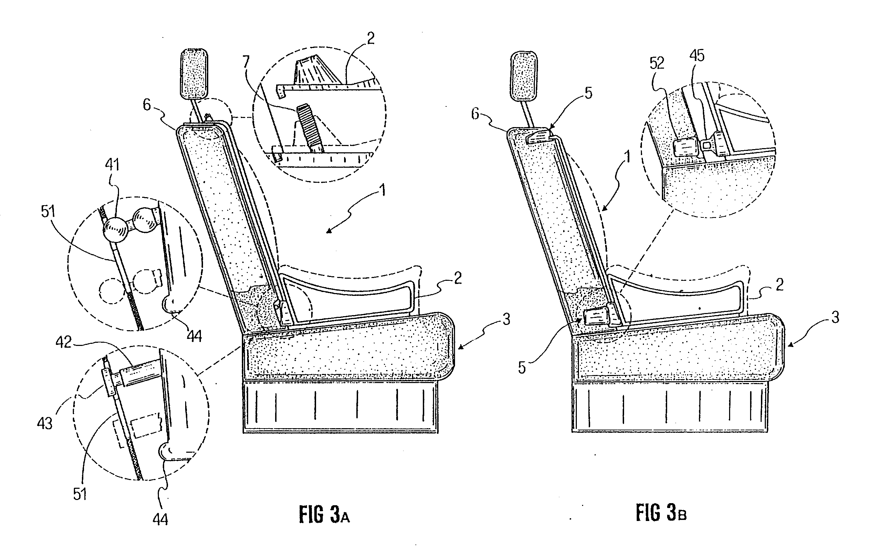

With reference to figures 3a and 3b, three embodiments of the members for engageing the infant seat on the car seat, respectively, are shown in greater detail.

In the following description of the figures, for the sake of simplicity the same functional parts will be indicated with the same numbers.

As can be seen in figure 3a the engagement members 4 on the infant seat are constituted, according to a first preferred embodiment, of a pin 41 having two spherical heads suitable for slidingly engaging with a slot 51 formed on the plate 5 integral with the seat back 6.

In a second preferred embodiment the engagement member 4 of the infant seat is constituted of a pin 42 having a flat head 43 which is suitable for engaging with the slot 51 on the plate 5.

Furthermore, in the two embodiments described above a protrusion 44 is provided, integral with the infant seat and suitable for limiting the excursion of the pin 41 or 42 during its engagement with the slot 51.

In addition to this, as illustrated in figure 3a, in both the embodiments described above the infant seat is engaged, at the top part of the seat back 6, by means of the pin 7 and a respective screw-on engagement member, i.e. a bolt or the like (not shown in the figure).

In figure 3b, according to a third embodiment of the infant seat the engagement members 4 are constituted of male members 45 suitable for engaging with respective female members 52 integral with the seat back 6, the latter being of the snap-on type typically used to lock safety seat belts in automobiles. Disengagement of said members 45 and 52 takes place in a known manner.

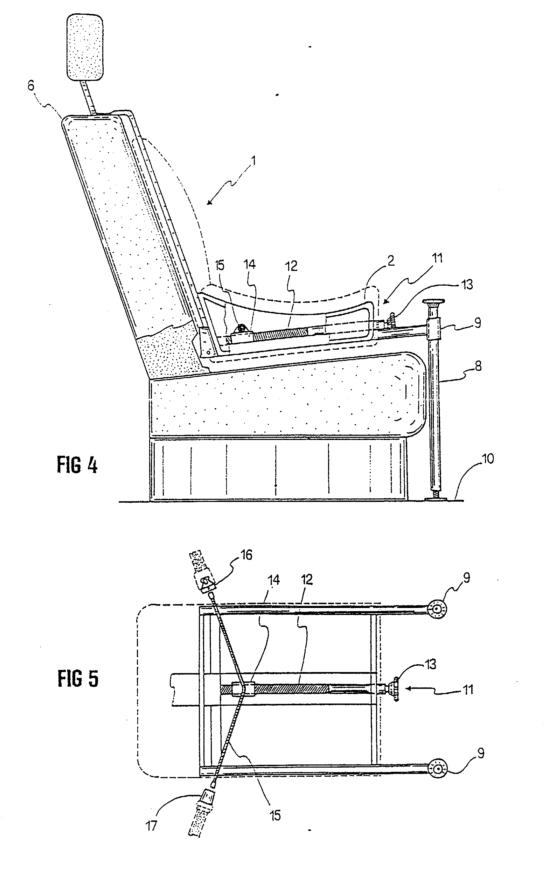

With reference now to figures 4 and 5, a fourth embodiment of the infant seat according to the present invention is shown.

As can be seen, the frame 2 has two forward protruding portions, on the ends of which are slidingly mounted two support members 8 (only one of which is shown in the figures). The support members 8 are suitable for being inserted into respective housings 9 integral with each end of the frame 2 and, after resting on the floor 10 of the vehicle, to be positionally locked, for example by means of a threaded engagement or the like.

In this way, the support members 8 provide a rest for the infant seat on the floor 10 of the automobile, thus eliminating the tendency of the seat to overturning by tipping forwards in case of impact of the vehicle.

In addition to this, as illustrated in greater detail in figure 5, the infant seat is provided with a device 11 for pre-tensioning of the seat belt of the seat on which it rests. The device 11 comprises a threaded member 12 rotationally mounted on the frame 2 and activated by means of a steerwheel 13 integrally connected to the member 12. A cursor 14 is slidingly mounted on the threaded member 12, and said cursor is, in turn, connected to a cable-type member 15, for example a steel cable of the type used for safety belts. At each end of the cable-type member 15 two engagement members 16 and 17 are arranged, each apted to engage with respective engagement members on the safety seat belt of the car seat on which the infant seat rests (not illustrated).

As can be easily seen, at each turn of the steerwheel 13 the cursor increases or decreases the tension on the cable 15 which, in turn, increases or decreases the tension on the safety seat belt to which it is connected. This prevents dangerous elongation of the safety belt and movements of the infant seat in case of impact. Furthermore, the infant seat may be connected at the top thereof to the car seat in one of the abovementioned manners.

It should be noted here that it is possible to obtain the same effects of the threaded member 12 and the cursor 14 different type of device may be employed, for example a rack-type device with snap-on tooth.

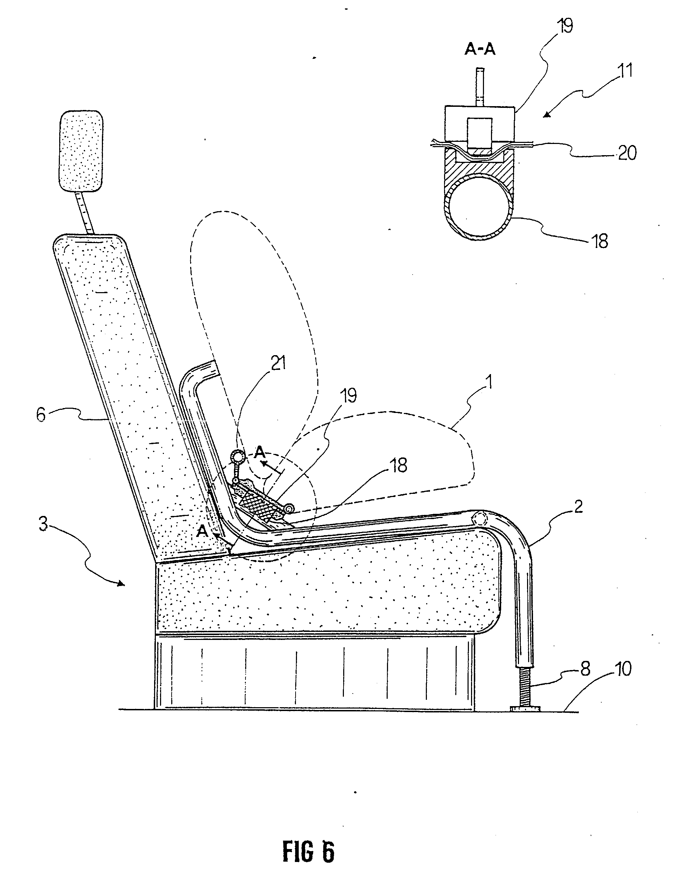

With reference to figure 6, a side view of a fifth embodiment of the infant seat according to the present invention is shown.

As can be seen, the frame 2 has extensions in the direction of the floor 10 of the vehicle, and at which the support members 8 are slidingly arranged. Furthermore, the frame 2 has a pre-tensioning device 11 (illustrated in enlarged section form in the detail). The device 11 has a pair of members 18 (only one of which is illustrated in the figure and which will be illustrated in greater detail in the following). Each member 18 is substantially cylindrical in shape and integral with the frame 2, and has on the outside thereof a "U" shaped housing suitable for housing a safety seat belt in the manner illustrated below.

To the member 18 is hinged a substantially "T" shaped member 19, which is complementary to said "U" shaped housing on the member 18. The two members 18 and 19 are apted to be locked together by means of a snap-on tooth 20 that can be activated by means of a handle 21 in a *per se* known manner.

The arrangement of the members 18 and 19 is such that, following to the positioning of a safety seat belt 20 between said members and the subsequent locking of them, the frictional force generated prevents the belt 20 from sliding on said members 18 and 19, thus avoiding any dangerous extension of said belt should the vehicle crash, while at the same time holding the safety seat belt tight and, therefore, preventing it from extending any further.

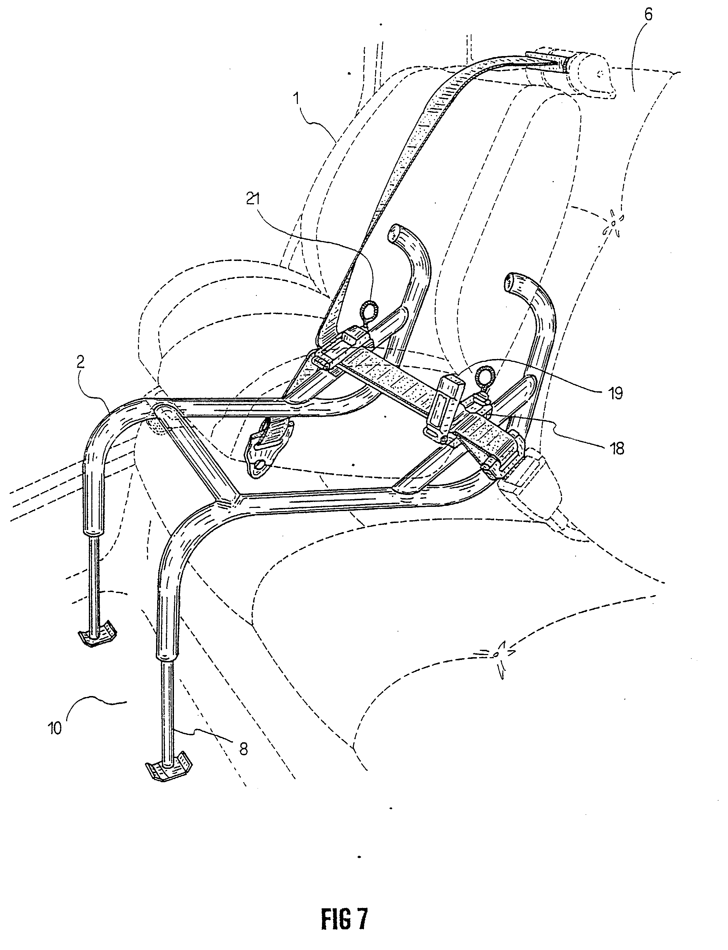

With reference to figure 7, it shows a perspective wiew of the fifth embodiment of the infant seat according to the present invention.

As can be seen, the figure illustrates the arrangement of the pre-tensioning device 11 and in particular said pair of members 18 and 19, wherein one of them is in the closed position and the other in the open position, and the arrangement of the safety seat belt between said members and through the infant seat.

Furthermore, although it is not shown in the figure, a device may be provided for the adjustment of the tilt of the infant seat with respect to the car seat upon which it rests, in a *per se* known manner.

## Claims

1. An infant safety seat for vehicles, in particular for automobiles, comprising: a main seat body, a support frame for supporting said seat body on a seat of the vehicle, a fixing device for fixing and adjusting the position of said seat body on said frame, and a plurality of seat belts for holding an infant onto the infant safety seat;
characterised in that said support frame comprises locking means for locking the infant seat on a respective seat of the vehicle, said locking means being integral with said frame and, optionally, support means for supporting said frame on the floor of the vehicle.

2. An infant safety seat for vehicles according to claim 1, wherein said locking means comprises a plurality of male engagement members integral with said frame and suitable for engaging in a snap-on manner with respective female members integrally mounted on the car seat on which the infant seat rests.

3. An infant safety seat for vehicles according to the preceding claim, wherein said male type engagement members integral with said frame are choosen from the group comprising:
- snap-on hook of the kind suitable for engaging with the female engagement of a vehicle safety seat belt locking device;
- substantially cylindrical pin with a head suitable for engaging with a respective slot in the female members provided in the seat of the vehicle.

4. An infant safety seat for vehicles according to any of the preceding claims, wherein said locking means futher comprises at least one locking device integral with said frame of the infant seat and suitable for engaging in a removable manner with at least one portion of the safety seat belt ot the vehicle seat on which the infant seat rests.

5. An infant safety seat for vehicles according to the preceding claim, wherein said locking device comprises:
- a first member, integrally arranged on the frame;
- a second member connected to the first member in a pivotable manner; and
- second locking means for locking said second member into said first member and integrally mounted on said first and second member,
the arrangement of the first and second member being such as to allow housing of a portion of a safety seat belt between said first and second members when in an open condition, and to prevent sliding of said safety seat belt when the second member is closed on said first member.

6. An infant safety seat for vehicles according to the preceding claim, wherein said second locking means comprises:
- a locking tooth; and
- a gripping handle connected to said locking tooth, wherein said locking tooth is suitable for holding the second member and the first member closed together.

7. An infant safety seat for vehicles according to any of the preceding claims, wherein said support means for supporting said frame on the floor of the vehicle comprises at least one elongated member slidingly connected to the frame in a lockable manner, and suitable for engaging with the vehicle floor under the vehicle seat and providing a support portion for said infant seat.

8. An infant safety seat for vehicles according to any of claims 1-4 and 7, wherein said locking means comprises:
- a cable-type member arranged in an adjustable manner inside the frame;
- at least one engagement member provided on each end of said cable-type member and suitable for engaging with a respective engagement member of a safety seat belt provided in the vehicle; and
- at least one tension adjusting device of the cable-type member arranged on the frame.

9. An infant safety seat for vehicles according to the preceding claim, wherein said tension adjusting device comprises:
- an endless screw member rotationally mounted on the frame; and
- a cursor slidingly fitted on said endless screw member and suitable for engaging with said cable-type member,
the arrangement being such that at each turn of the endless screw member corresponds to a respective increase or decrease of the tension on the cable-type member when the latter is engaging with a respective safety seat belt and thus providing for pre-tensioning thereof.

10. An infant safety seat for vehicles, in particular for automobiles, substantially as described above with reference to the enclosed drawings.
